# EUROPÄISCHE PATENTSCHRIFT

(11) **EP 4 188 183 B1**
(45) Veröffentlichungstag und Bekanntmachung des Hinweises auf die Patenterteilung: **29.10.2025**
(21) Anmeldenummer: 21743488.5
(22) Anmeldetag: 14.07.2021
(51) Int. Cl.: A47L 11/40

(54) **BODENREINIGUNGSSYSTEM**
FLOOR CLEANING SYSTEM
SYSTÈME DE NETTOYAGE DE PLANCHER

(30) Priorität: 30.07.2020 DE 102020209608
(43) Veröffentlichungstag der Anmeldung: 07.06.2023
(73) Patentinhaber: BSH Hausgeräte GmbH, 81739 München (DE)
(72) Erfinder: DANIEL, Kristina, 97616 Bad Neustadt (DE); SCHMITT, Kai, 97633 Saal (DE); SCHNITZER, Frank, 97616 Bad Neustadt (DE)
(86) Internationale Anmeldenummer: PCT/EP2021/069576
(87) Internationale Veröffentlichungsnummer: WO 2022/023037

(56) Entgegenhaltungen:
- US-A1- 2019 320 866

## Beschreibung

Die Erfindung betrifft ein Bodenreinigungssystem, das ein mobiles, selbstfahrendes Gerät, insbesondere Reinigungsgerät zur autonomen Bearbeitung von Bodenflächen wie ein Saug- und/oder Kehr- und/oder Wischroboter, und ein tragbares Zusatzgerät für einen Benutzer aufweist. Zudem betrifft die Erfindung ein Verfahren zur automatischen Bearbeitung von Bodenflächen mit Hilfe eines Bodenreinigungssystems.

Bodenreinigungen mit mobilen, selbstfahrenden Geräten wie beispielsweise Staubsaugerroboter sind allgemein bekannt. Dabei steht zur Auwahl der zu reinigenden Bodenflächen neben der Reinigung der gesamten vom Roboter erreichbaren Fläche (Clean All) und der Reinigung ganzer Räume (Room Cleaning) eine Reinigung kleiner Bereiche (Spot Cleaning) zur Verfügung. Häufig erfolgt die Auswahl der Spot Cleaning Funktion in einer App über die Angabe des Flächenmittelpunkts der zu reinigenden Fläche. Dabei ist für den Benutzer in einer Kartenansicht der App jedoch meist nicht ersichtlich, wo genau die Grenzen der Spot Cleaning Fläche sind und welche Ausrichtung diese Fläche im Raum hat. Zudem hängt die Genauigkeit von einem gewählten Zoom und der Größe der Finger des Benutzers ab. Auch ist das Spot Cleaning meist auf kleine Flächen unter 1,2 m x 1,2 m begrenzt, womit größere Flächen damit nicht abdeckbar sind.

Wird die sogenannte Spot Cleaning Funktion ohne App gewählt, ist es notwendig, dass der Benutzer den Reinigungsroboter zur gewünschten Fläche trägt, startet und anschließend an die Reinigung den Reinigungsroboter zurück zur Basisstation trägt. Damit geht jedoch eine unhandliche, benutzerunfreundliche und aufwendige Bodenreinigung einher.

Die Druckschrift US 2019/0320866 A1 beschreibt einen Laser, mit dem von einem Nutzer eine Grenze eines interessanten Bereichs aufgezeigt wird, um einen Saugroboter zu dem interessanten Bereich zu navigieren und eine Bereichsreinigung zu starten.

Aufgabe der Erfindung ist es, die oben genannten Nachteile nach dem Stand der Technik zu vermeiden und insbesondere ein benutzerfreundliches, handliches und vorzugsweise präzises Bodenreinigungssystem zu ermöglichen, sowie ein verbessertes und insbesondere vereinfachtes Verfahren zum Bearbeiten von Bodenflächen bereitzustellen.

Diese Aufgabe wird durch ein Bodenreinigungssystem mit den Merkmalen des Anspruchs 1 und durch ein Verfahren zum Bearbeiten von Bodenflächen mit den Merkmalen des Anspruchs 8 gelöst. Vorteilhafte Ausgestaltungen und Weiterbildungen sind Gegenstand der Unteransprüche.

Erfindungsgemäß weist ein Bodenreinigungssystem ein mobiles, selbstfahrendes Gerät und ein tragbares Zusatzgerät für einen Benutzer auf. Das mobile, selbstfahrende Gerät ist insbesondere ein Reinigungsgerät zur autonomen Bearbeitung von Bodenflächen wie ein Saug- und/oder Kehr- und/oder Wischroboter und weist ein ansteuerbares Fahrwerk, eine Steuerung und ein Kommunikationsglied auf. Das Zusatzgerät weist eine Bedieneinheit, eine Kommunikationseinheit und eine Positionsermittlungseinheit auf, wobei der Benutzer mit der Positionsermittlungseinheit die zu reinigende Bodenfläche definiert, indem der Benutzer mit dem Zusatzgerät einen Reinigungs- oder Begrenzungsweg abgeht, der an das mobile, selbstfahrende Gerät übermittelbar ist, um mit dem mobilen, selbstfahrenden Gerät entlang des Reinigungswegs oder eine vom Begrenzungsweg eingeschlossene Bodenfläche gemäß einem Reinigungsauftrag zu reinigen. Bei einem offenen Reinigungsweg erfolgt das Reinigen der Bodenfläche exakt entlang des Reinigungswegs, und bei einem geschlossenen Begrenzungsweg erfolgt das Reinigen der Bodenfläche zusätzlich innerhalb einer vom Begrenzungsweg definierten Fläche.

Die erfindungsgemäße Lösung zeichnet sich dadurch aus, dass der Benutzer nicht auf durch die Robotersoftware festgelegte Routen, Flächen und Möglichkeiten angewiesen ist, sondern eine beliebige Reinigungsfläche in der realen Umgebung vorgeben und realisieren kann. Ein flexibles, handliches, benutzerfreundliches und präzises Vorgeben der zu reinigenden Bodenfläche ermöglicht sich mit dem Vorteil, dass eine Anpassung insbesondere an alle vorliegenden Begebenheiten bezogen auf die Auswahl der zu reinigenden Bodenfläche möglich ist. Insbesondere kann die vorgegebene Bodenfläche beziehungsweise der Reinigungs- oder Begrenzungsweg uneingeschränkt an die Gegebenheiten der zu reinigenden Wohnung beziehungsweise des zu reinigenden Raums vom Benutzer angepasst werden. Es gibt hier keine Vorgaben hinsichtlich Größe, Form oder Ausrichtung.

Dabei stellt das Ablaufen des Reinigungs- oder Begrenzungswegs eine intuitive und einfache Steuerung für den Benutzer dar, wobei gleichzeitig das wahrgenommene Kontrollgefühl des Benutzers durch die Interaktion des Benutzers erhöht werden kann.

Unter einem Bodenreinigungssystem ist insbesondere jegliches System zu verstehen, dass zumindest eine Bodenreinigungskomponente und eine Bedienkomponente umfasst, wie vorliegend das mobile, selbstfahrende Gerät und das Zusatzgerät, wobei zwischen diesen Geräten zumindest in eine Richtung eine Kommunikation möglich ist, und vorzugsweise beide Geräte miteinander kommunizieren.

Unter einem mobilen, selbstfahrenden Gerät ist insbesondere ein Reinigungs- oder Rasenmähergerät zu verstehen, welches insbesondere im Haushaltsbereich Bodenflächen oder Rasenflächen autonom bearbeitet. Hierunter zählen unter anderem Saug- und/oder Kehrroboter wie beispielsweise Staubsaugerroboter, Wischroboter wie beispielsweise Naßreinigungsroboter oder Rasenmäherroboter. Diese Geräte arbeiten im Betrieb (Reinigungsbetrieb oder Rasenmäherbetrieb) bevorzugt ohne oder mit möglichst wenig Benutzereingriff. Beispielsweise verfährt das Gerät selbsttätig in einen vorgegebenen Raum, um entsprechend einer vorgegebenen und einprogrammierten Verfahrensstrategie den Boden abzureinigen.

Unter einer Steuerung ist vorliegend insbesondere jegliche Einheit zu verstehen, die unter anderem das Kommunikationsglied zur Übermittlung und Übertragung von Daten, Parametern und/oder Treibern und Software umfasst. Die Steuerung ist also geeignet, mit dem Zusatzgerät zu kommunizieren. Die Steuerung kann zudem einen Speicher für die zu übermittelten Daten aufweisen.

Das Kommunikationsglied und die Kommunikationseinheit dienen vorliegend zur Übermittlung und Übertragung von Daten, Parametern und/oder Treibern und Software. Insbesondere dient das Kommunikationsglied zur Kommunikation mit dem Zusatzgerät und insbesondere mit der Kommunikationseinheit, und umgekehrt.

Unter einem ansteuerbaren Fahrwerk ist jegliches Fahrwerk zu verstehen, dass mittels der Steuerung ansteuerbar ist und zugleich geeignet ist, das mobile, selbstfahrende Gerät an einen vorgesehenen Ort zu fahren. Hierzu weist das Fahrwerk vorzugsweise eine Mehrzahl von Rädern oder Rollen auf.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Unter einer Bedieneinheit ist insbesondere jegliche Einheit zu verstehen, die zu einer Bedienung des Zusatzgeräts geeignet ist, wie beispielsweise ein tatsächliches oder virtuelles Tastenfeld, ein Touchpad und/oder ein zugehöriger Bildschirm beziehungsweise Display.

Unter einer Positionsermittlungseinheit ist jegliche Einheit zu verstehen, die zu einer Positionsermittlung des Zusatzgeräts geeignet ist. Hierzu finden beispielsweise Inertialsensoren (inertial measurement units; Beschleunigungssensoren und Gyroskope) Verwendung, die in dem Zusatzgerät verbaut sind, und die Positions- und Lageänderungen messen und somit auf Bewegungen des Zusatzgeräts reagieren können. Alternativ oder zusätzlich können noch andere und/oder weiter Positionsermittlungseinheiten (Bluetooth localisation, sattelitengestützte Positionierung, Optischer Fluss etc.) verwendet werden, um die Positioniergenauigkeit zu erhöhen.

Die Erfindung zeichnet sich dadurch aus, dass der Benutzer mit dem Zusatzgerät beispielsweise eine App startet, die bei einer Betätigung eines Startbuttons einen Aufzeichnungsprozess der Positionsermittlungseinheit beginnt sowie eine Bewegung aufzeichnet und zu einem Reinigungsweg beziehungsweise Begrenzungsweg zusammenfasst, die vom Benutzer abgegangen wird. Diese Daten werden anschließend an das mobile, selbstfahrende Gerät übermittelt, insbesondere über das Kommunikationsglied und die Kommunikationseinheit, womit das mobile, selbstfahrende Gerät die Bodenreinigung entlang des Reinigungswegs oder der vom Begrenzungsweg eingeschlossenen Bodenfläche gemäß dem Reinigungsauftrag beginnt.

Bei einer vorteilhaften Ausführungsform ist ein Startpunkt des Reinigungs- oder Begrenzungsweges ein Standort des mobilen, selbstfahrenden Geräts. Der Standort ist insbesondere der Ist-Ort des mobilen, selbstfahrenden Geräts. Beispielsweise ist der Standort der Ladeort des mobilen, selbstfahrenden Geräts, an dem insbesondere seine Basisstation steht. Die Aufzeichnung des zu reinigenden Wegs beginnt vorliegend also am mobilen, selbstfahrenden Gerät selbst. Das hat insbesondere den Vorteil, dass das mobile, selbstfahrende Gerät bereits beim Starten den genauen Weg vom Benutzer vorgegeben bekommt. Der Benutzer kann mit Vorteil von Anfang an, also vom Standort des mobilen, selbstfahrenden Geräts den Weg festlegen und bestimmen, den das mobile, selbstfahrende Gerät nehmen soll. Hindernisvermeidung oder ein vorheriges Planen oder Programmieren eines bevorzugten Weges sind damit hinfällig. Eine einfache, benutzerfreundliche Handhabung, die zudem kaum störungsanfällig ist, ermöglicht sich so mit Vorteil.

Zum Starten des Ermittelns des Reinigungs- oder Begrenzungswegs hält der Benutzer beispielsweise das Zusatzgerät über das mobile, selbstfahrende Gerät und betätigt eine Start-Taste beziehungsweise einen Start-Button. Von diesem Standort aus geht der Benutzer den gewünschten Reinigungs- beziehungsweise Begrenzungsweg ab, wodurch dieser Weg festgelegt wird. Ist der Weg abgeschlossen, wird entsprechend eine Stopp-Taste gedrückt. Alternativ ist es möglich, dass die Start-Taste während des Abgehens des gewünschten Reinigungs- oder Begrenzungsweg gehalten wird. Bei Abschließen des Weges wird in diesem Fall die Start-Taste losgelassen, womit der Reinigungs- oder Begrenzungsweg mit Start- und Endpunkt festgelegt wird. Durch ein Drücken einer weiteren Taste oder durch ein erneutes Drücken der Start-Taste kann der aufgezeigte Weg und insbesondere dessen Daten an das mobile, selbstfahrende Gerät übertragen werden, welches anschließend den definierten Weg abfährt und eine entsprechende Reinigung durchführt.

Bei einer weiteren vorteilhaften Ausführungsform ist der Reinigungs- oder Begrenzungsweg anhand von einem Standort des mobilen, selbstfahrenden Geräts ermittelbar. Vorliegend sind demnach außer dem Standort des mobilen, selbstfahrenden Geräts keine weiteren Bezugspunkte oder Lagepunkte des Raumes oder der Wohnung notwendig, um die zu reinigende Bodenfläche zu definieren. Der vom Benutzer aufgezeichnete Reinigungs- oder Begrenzungsweg ist also die einzige Information, die vom mobilen, selbstfahrenden Gerät direkt zum Definieren der zu reinigenden Bodenfläche verwendet wird, und insbesondere, um diese Bodenfläche räumlich bezüglich des Standorts und demnach bezüglich der Startposition des mobilen, selbstfahrenden Geräts einzuordnen.

Hierzu ist also kein absolutes Bezugssystem oder Koordinatensystem des Raums oder der Wohnung notwendig. Eine Kartenansicht der Wohnung und des Raumes, die beispielsweise in dem Zusatzgerät hinterlegt ist, ist für eine zuverlässige und störungsfreie Bodenreinigung mit Vorteil zusätzlich nicht nötig. Selbstverständlich kann aus benutzerfreundlicher Sicht zusätzlich der abgegangene Reinigungs- oder Begrenzungsweg in einer Kartenansicht auf dem Zusatzgerät, beispielsweise in der zugeordneten (Reinigungs-)App, angezeigt sein. Dies dient hierbei jedoch lediglich der Visualisierung und Wegkontrolle für den Benutzer, und nicht zur Ermittlung der zu reinigenden Bodenfläche in Bezug zur Wohnung beziehungsweise zum Raum.

Bei einer weiteren vorteilhaften Ausführungsform startet das Definieren des Reinigungs- oder Begrenzungswegs an einem Standort des mobilen, selbstfahrenden Geräts, wobei das Reinigen der Bodenfläche an einem vom Benutzer definierten Reinigungspunkt am Reinigungsweg oder Begrenzungsweg startet. Vorliegend ist es also nicht zwingend erforderlich, dass die Reinigung direkt am Standort beziehungsweise an der Basisstation des mobilen, selbstfahrenden Geräts beginnt. Lediglich das Abgehen des zu fahrenden Weges durch den Benutzer und damit das Definieren des Weges an sich startet am mobilen, selbstfahrenden Geräts selbst.

Beispielsweise startet der Benutzer mit dem Zusatzgerät die (Reinigungs-)App am Standort des mobilen, selbstfahrenden Geräts und betätigt einen Start-Button. Von diesem Standort aus geht der Benutzer bis zu der Stelle, die er reinigen lassen möchte. Im Folgenden drückt der Benutzer - beispielsweise auf der App - bevorzugt einen Reinigungs-Button und hält diesen gedrückt. Während der Reinigungs-Button gedrückt gehalten wird, geht der Benutzer den Reinigungsweg ab beziehungsweise umrundet die zu reinigende Bodenfläche. Für das mobile, selbstfahrende Gerät wird damit der Begrenzungsweg beziehungsweise Reinigungsweg festgelegt. Ist der Reinigungs- oder Begrenzungsweg abgeschlossen, kann der Reinigungs-Button losgelassen werden. Durch ein Drücken einer weiteren Taste oder ein erneutes Drücken des Start-Buttons wird der Weg und seine Daten an das mobile, selbstfahrende Gerät übermittelt, welches nun an die Reinigungsstelle fährt und mit der Reinigung beginnt.

Erfindungsgemäß erfolgt bei einem offenen Reinigungsweg das Reinigen der Bodenfläche exakt entlang des Reinigungswegs, wohingegen bei einem geschlossenen Begrenzungsweg das Reinigen der Bodenfläche zusätzlich innerhalb einer vom Begrenzungsweg definierten Fläche erfolgt. Als offener Reinigungsweg ist insbesondere ein Weg mit voneinander getrennten beziehungsweise unterschiedlichen Start- und Endpunkten oder eine durch einen Reinigungsweg (komplett, nahezu oder nur teilweise) ausgefüllte (Boden-)Fläche zu verstehen. Ein geschlossener Begrenzungsweg dagegen ist als Weg entlang einer einschließenden (Boden-)Fläche mit sich (nahezu) überdeckendem Start- und Endpunkt und ohne eingeschlossenen Reinigungsweg zu verstehen.

Bei einem offenen Reinigungsweg folgt das mobile, selbstfahrende Gerät vorzugsweise exakt dem definierten Reinigungsweg und fährt somit einen vom Benutzer gezogenen Weg, Spur beziehungsweise Pfad ab. Bei einem geschlossenen Begrenzungsweg hingegen wird aus dem abgegangenen Weg der Rand einer Fläche generiert, die vom mobilen, selbstfahrenden Gerät durch Umfahren und anschließendes (vorteilhafterweise systematisches) Abfahren (beispielsweise durch Mäandern) gereinigt wird. Das Unterscheiden zwischen offenem Reinigungsweg und geschlossenem Begrenzungsweg erfolgt vorzugsweise automatisch. Alternativ ist denkbar, dass der Benutzer manuell am Zusatzgerät angibt, was Reinigungsweg und was Begrenzungsweg ist.

Bei einem vom Benutzer vordefinierten offenen Reinigungsweg ist es beispielsweise auch möglich, das mobile, selbstfahrende Gerät neben der Reinigungsfunktion mit einer weiteren Funktion auszustatten, wie zum Beispiel einer Bedienfunktion und/oder einer Objektbeförderung. Hierzu gibt der Benutzer den offenen Reinigungsweg vor, beispielsweise von einer Küche zu einer Couch im Wohnzimmer. Befindet sich nun eine Person des Haushaltes in der Küche, um zum Beispiel Snacks, Getränke und/oder Essen herzurichten, während sich eine andere Person auf der Couch im Wohnzimmer aufhält, kann die Person in der Küche die bereits fertigen Gerichte und/oder Getränke auf dem mobilen, selbstfahrenden Gerät platzieren und das Gerät zur Couch im Wohnzimmer schicken, wo die andere Person die transportierten Gegenstände entgegennehmen kann.

Auch ist als weitere Funktion bei einem offenen Reinigungsweg eine Patrouillefunktion möglich. Hierzu wird dem mobilen, selbstfahrenden Gerät beispielsweise ein fester Reinigungsweg vorgegeben, entlang dessen das mobile, selbstfahrende Gerät beispielsweise zu vorbestimmten Uhrzeiten entlang fährt und zum Beispiel mit einer Kamera die Umgebung abscannt, um Unregelmäßigkeiten zu entdecken und/oder zu detektieren.

Bei einer weiteren vorteilhaften Ausführungsform ist der Reinigungs- oder Begrenzungsweg in der Steuerung des mobilen, selbstfahrenden Geräts speicherbar. Besonders bevorzugt ist der Reinigungs- und Begrenzungsweg von dem mobilen, selbstfahrenden Gerät wiederholbar abfahrbar. Durch Speichern der aufgezeichneten Wege können diese beispielsweise mit Vorteil regelmäßig und wiederholt gereinigt werden. Zudem ist denkbar, so das mobile, selbstfahrende Gerät auf einen sogenannten Pfadverfolgungsmodus zu schicken und/oder Patrouillenfahrten durchzuführen. Zur Wiederholung ist hierbei mit Vorteil kein nochmaliges Abgehen des Reinigungs- oder Begrenzungswegs aufgrund der Möglichkeit des Speicherns notwendig, womit sich eine einfache, benutzerfreundliche und zuverlässige Handhabung ermöglicht.

Bei einer weiteren vorteilhaften Ausführungsform sind durch den Benutzer mittels des Reinigungs- oder Begrenzungswegs No-Go-Flächen definierbar, die insbesondere von dem Reinigungsauftrag ausgeschlossen sind. Das mobile, selbstfahrende Gerät kann dadurch mit Vorteil No-Go-Flächen erlernen, ohne dabei die No-Go-Zonen in dem Zusatzgerät und insbesondere in der App an der jeweils richtigen Stelle in einer Karte zu definieren. Durch ein einfaches Abgehen und insbesondere durch ein Ausweichen vor beispielsweise Hindernissen durch den Benutzer beim Ermitteln des Reinigungs- oder Begrenzungsweg ermöglicht sich eine zuverlässige, hindernisfreie, störungsunanfällige und einfache Ermittlung des Reinigungs- oder Begrenzungswegs.

Erfindungsgemäß umfasst ein Verfahren zur automatischen Bearbeitung von Bodenflächen mit Hilfe eines Bodenreinigungssystems folgende Verfahrensschritte:
- Bestimmten des Reinigungs- oder Begrenzungsweg mit dem Zusatzgerät durch Abgehen dieses Wegs durch den Benutzer,
- Übermitteln des abgegangenen Reinigungs- oder Begrenzungswegs an das mobile, selbstfahrende Gerät,
- Beginn der Reinigung entlang des abgegangenen Reinigungswegs oder der vom Begrenzungsweg eingeschlossene Bodenfläche gemäß dem Reinigungsauftrag, wobei bei einem offenen Reinigungsweg das Reinigen der Bodenfläche exakt entlang des Reinigungswegs erfolgt, und bei einem geschlossenen Begrenzungsweg das Reinigen der Bodenfläche zusätzlich innerhalb einer vom Begrenzungsweg definierten Fläche erfolgt.

Jegliche Merkmale, Ausgestaltungen, Ausführungsformen und Vorteile das Bodenreinigungssystem betreffend finden auch in Zusammenhang mit dem erfindungsgemäßen Verfahren Anwendung, und umgekehrt.

Die erfindungsgemäße Lösung sieht also vor, dass der Benutzer dem mobilen selbstfahrenden Gerät eine zu reinigende Bodenfläche mittels Abschreiten dieser Bodenfläche mit dem Zusatzgerät vorgibt. Durch das benutzerabhängige Abschreiten kann die vorgegebene Bodenfläche uneingeschränkt an die Gegebenheiten einer Wohnung wie beispielsweise vorhandene Hindernisse oder Treppenstufen einfach und kundenorientiert angepasst werden. Hier sind keine Vorgaben hinsichtlich Größe, Form oder Ausrichtung der zu reinigenden Bodenfläche gegeben. Eine Interaktion durch den Benutzer und gleichzeitig eine Kontrollmöglichkeit durch den Benutzer die zu reinigende Bodenfläche betreffend kann so realisiert werden. Zudem stellt das Ablaufen der zu reinigenden Bodenfläche eine intuitive und einfache Steuerung für den Benutzer dar.

Das genaue Vorgehen hierzu ist in Zusammenhang mit dem Bodenreinigungssystem erläutert und findet hier entsprechend Anwendung.

Bei einer vorteilhaften Ausführungsform wird der Reinigungs- oder Begrenzungsweg anhand von einem Standort des mobilen, selbstfahrenden Geräts ermittelt. Weitere Bezugspunkte, Bezugssysteme oder Koordinatensysteme sind vorliegend vorteilhafterweise nicht notwendig. Als einziger Bezugspunkt zur Ermittlung des Reinigungs- oder Begrenzungsweges ist demnach der Standort des mobilen, selbstfahrenden Geräts notwendig. Damit ist eine benutzerfreundliche, störungsunanfällige und einfache Handhabe für den Benutzer gewährleistet.

Die Erfindung wird anhand der nachfolgenden, lediglich Beispiele darstellenden Figuren näher erläutert. Es zeigen:
- Figur 1:: eine schematische Ansicht eines Ausführungsbeispiels eines erfindungsgemäßen Verfahrens zur automatischen Bearbeitung von Bodenflächen mit Hilfe eines Bodenreinigungssystems, und
- Figur 2:: eine weitere schematische Ansicht eines Ausführungsbeispiels eines erfindungsgemäßen Verfahrens zur automatischen Bearbeitung von Bodenflächen mit Hilfe eines Bodenreinigungssystems.

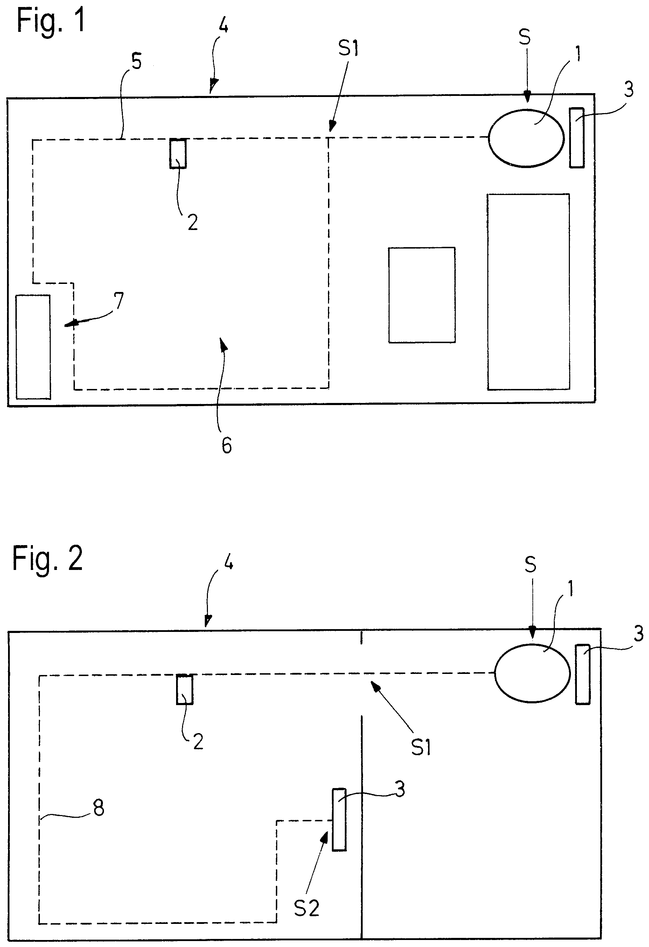

In Figur 1 ist schematisch ein Verfahren zur automatischen Bearbeitung von Bodenflächen mit Hilfe eines Bodenreinigungssystems mit einem mobilen, selbstfahrenden Gerät 1 und einem Zusatzgerät 2 gezeigt. Die Figur zeigt exemplarisch eine Skizze einer Aufsicht auf ein zu reinigendes Zimmer 4.

Das mobile, selbstfahrende Gerät 1 ist beispielsweise ein Bodenreinigungsroboter, der an seiner Basisstation 3 steht und entsprechend seines Reinigungsauftrags das Zimmer 4 reinigen soll. Zum Ermitteln der zu reinigenden Bodenfläche findet das Zusatzgerät 2 Verwendung, das beispielsweise ein Handy oder Smartphone des Benutzers mit einer entsprechenden App ist, die für das Reinigungsprogramm des Bodenreinigungsroboters zuständig ist.

Zum Ermitteln der zu reinigenden Bodenfläche startet der Benutzer die entsprechende App am Zusatzgerät 2, insbesondere den Steuerungsprozess. Durch das Drücken einer Start-Taste beginnt der Aufzeichnungsprozess für die Positionsermittlungseinheit im Zusatzgerät 2, insbesondere der Inertialsensoren, Beschleunigungssensoren und/oder Gyroskope. Der Benutzer startet diesen Prozess, während er das Zusatzgerät 2 über das mobile, selbstfahrende Gerät 1 hält. Von diesem Startpunkt S aus läuft der Benutzer nun bis zu einer Stelle S1, bei der er die Reinigung starten lassen möchte. Im Folgenden drückt der Benutzer auf der App eine weitere Taste, beispielsweise eine Reinigungstaste und hält diese gedrückt. Während die Reinigungstaste gedrückt gehalten wird, umrundet der Benutzer entlang eines Begrenzungswegs 5 die zu reinigende Bodenfläche 6. Für das mobile, selbstfahrende Gerät 1 wird damit die Umrandung der zu reinigenden Bodenfläche 6 festgelegt. Ist die Umrandung an der Stelle S1 abgeschlossen, lässt der Benutzer die Reinigungstaste los. Eine Darstellung der Umrandung ist in einer Kartenansicht der App im Zusatzgerät 2 zur Kontrolle der ermittelten Daten für den Benutzer anzeigbar. Durch ein erneutes Drücken der Start-Taste werden die ermittelten Daten an das mobile, selbstfahrende Gerät 1 übertragen, welches anschließend entlang des Begrenzungswegs 5 und auf der vom Begrenzungsweg 5 umschlossenen Bodenfläche eine Reinigung durchführt. Insbesondere fährt das mobile, selbstfahrende Gerät 1 von seinem Startpunkt S aus bis zur Stelle S1 und startet dort die Reinigung.

Der vom Benutzer aufgezeichnete Begrenzungsweg 5 ist die einzige Information, die von dem mobilen, selbstfahrenden Gerät 1 direkt verwendet wird. Der vom Benutzer seit dem Start des Prozesses (also ab dem ersten Drücken auf die Start-Taste) zurückgelegte Weg - also der Weg zwischen dem Startpunkt S und der Stelle S1 - bis zum Beginn der Umrundung der Bodenfläche wird ausschließlich verwendet, um die Bodenfläche räumlich bezüglich des Startpunkts S zu- beziehungsweise einzuordnen.

Mit dem Zusatzgerät 2 können zusätzlich sogenannte No-Go-Zonen 7 definiert werden. Beispielsweise können so Hindernisse vorgegeben werden, um die das mobile, selbstfahrende Gerät 1 herumfahren soll. Hierzu geht der Benutzer beim Ermitteln des Begrenzungswegs 5 einfach um das Hindernis herum, womit der dem mobilen, selbstfahrenden Gerät 1 vorgegebene Weg ebenfalls um das Hindernis herumführt. Dies zeichnet sich als einfache Möglichkeit aus, Hindernisse durch den Benutzer zu definieren. Ein Ziehen mit dem Finger von sogenannten No-Go-Zonen an die richtige Stelle in einer Karte in der App ist damit mit Vorteil nicht notwendig.

Zusätzlich kann der Begrenzungsweg 5 in einem Speicher des mobilen, selbstfahrenden Geräts 1 hinterlegt und abgespeichert werden. Dadurch ist eine regelmäßige und wiederholbare Reinigung möglich.

In dem Ausführungsbeispiel der Figur 1 hat der Benutzer mit dem Zusatzgerät 2 einen geschlossenen Begrenzungsweg 5 definiert. Das bedeutet, der Startpunkt und der Endpunkt überdecken sich nahezu an der Stelle S1. Der Begrenzungsweg 5 schließt demnach die Bodenfläche 6 vollständig ein. Hierbei wird als Reinigungsfläche aus dem Begrenzungsweg eine Fläche generiert, die von dem mobilen, selbstfahrenden Gerät 1 durch Umfahren entlang des Begrenzungswegs 5 und anschließendes systematisches Abfahren (z. B. durch Mäandern) gereinigt wird.

Alternativ ist es möglich, mit dem Zusatzgerät 2 einen offenen Pfad festzulegen, also einen Reinigungsweg mit voneinander getrennten Start und Endpunkten. Ein derartiges Ausführungsbeispiel ist in Figur 2 gezeigt.

Figur 2 zeigt exemplarisch eine Skizze einer Aufsicht auf ein zu reinigendes Zimmer 4. Hierbei steht wiederum das mobile, selbstfahrende Gerät 1 an seiner Basisstation 3. Zum Definieren des Reinigungswegs 8 beginnt der Benutzer am Standort S des mobilen, selbstfahrenden Geräts 1 mit dem Zusatzgerät 2 das Aufzeichnen des gewünschten Reinigungswegs 8, beispielsweise durch Drücken der Start-Taste. An der Stelle S1 kann der Benutzer den Start der Reinigung durch beispielweise Drücken der Reinigungs-Taste festsetzen. Nun geht der Benutzer den gewünschten Reinigungsweg 8 ab, der an einer von der Stelle S1 unterschiedlichen Stelle S2 endet, beispielsweise an einer weiteren Basisstation 3. Beispielsweise durch ein erneutes Drücken der Start-Taste wird der definierte Reinigungsweg 8 beziehungsweise seine Daten an das mobile, selbstfahrende Gerät 1 übertragen, welches mit der Reinigung beginnt.

Bei einem sogenannten offenen Pfad folgt das mobile, selbstfahrende Gerät 1 exakt dem vorgegebenen Reinigungsweg 8. Das mobile, selbstfahrende Gerät 1 fährt also die vom Benutzer gezogene Spur nach. Hier wird im Unterschied zu dem geschlossenen Pfad aus Figur 1 dabei keine Fläche generiert, die gereinigt wird.

Das Abfahren dieser offenen Pfade kann zusätzlich für beispielsweise Patrouillenfahrten Anwendung finden. Dies ist insbesondere geeignet für mobile, selbstfahrende Geräte 1, die beispielsweise eine Kamera und/oder eine Streaming-Funktion integriert haben. Weiter kann das Abfahren offener Pfade zusätzlich mit einer Bedienfunktion und/oder einer Objektbeförderung verbunden sein, bei dem das mobile, selbstfahrende Gerät 1 als Transportmittel von Gegenständen wie beispielsweise Snacks, Essen und/oder Getränke dient.

## Patentansprüche

1. Bodenreinigungssystem, umfassend
- ein mobiles, selbstfahrendes Gerät (1), insbesondere Reinigungsgerät zur autonomen Bearbeitung von Bodenflächen (6) wie ein Saug- und/oder Kehr- und/oder Wischroboter, aufweisend ein ansteuerbares Fahrwerk, eine Steuerung und ein Kommunikationsglied,
- ein tragbares Zusatzgerät (2) für einen Benutzer, aufweisend eine Bedieneinheit, eine Kommunikationseinheit und eine Positionsermittlungseinheit,
wobei der Benutzer mit der Positionsermittlungseinheit die zu reinigende Bodenfläche (6) definiert, indem der Benutzer mit dem Zusatzgerät (2) einen Reinigungs-(8) oder Begrenzungsweg (5) abgeht, der an das mobile, selbstfahrende Gerät (1) übermittelbar ist, um mit dem mobilen, selbstfahrenden Gerät (1) entlang des Reinigungswegs (8) oder auf der vom Begrenzungsweg (5) eingeschlossene Bodenfläche (6) gemäß einem Reinigungsauftrag zu reinigen, **dadurch gekennzeichnet, dass** bei einem offenen Reinigungsweg (8) das Reinigen der Bodenfläche (6) exakt entlang des Reinigungswegs (8) erfolgt, und bei einem geschlossenen Begrenzungsweg (5) das Reinigen der Bodenfläche (6) zusätzlich innerhalb einer vom Begrenzungsweg (8) definierten Fläche erfolgt.

2. Bodenreinigungssystem nach Anspruch 1, wobei ein Startpunkt des Reinigungs-(8) oder Begrenzungswegs (5) ein Standort (S) des mobilen, selbstfahrenden Geräts (1) ist.

3. Bodenreinigungssystem nach einem der vorhergehenden Ansprüche, wobei der Reinigungs- (8) oder Begrenzungsweg (5) anhand von einem Standort (S) des mobilen, selbstfahrenden Geräts (1) ermittelbar ist.

4. Bodenreinigungssystem nach einem der vorhergehenden Ansprüche, wobei das Definieren des Reinigungs- (8) oder Begrenzungswegs (5) an einem Standort (S) des mobilen, selbstfahrenden Geräts (1) startet, und das Reinigen der Bodenfläche (6) an einem vom Benutzer definierten Reinigungspunkt (S1) am Reinigungsweg (8) oder Begrenzungsweg (5) startet.

5. Bodenreinigungssystem nach einem der vorhergehenden Ansprüche, wobei der Reinigungs- (8) oder Begrenzungsweg (5) in der Steuerung des mobilen, selbstfahrenden Geräts (1) speicherbar ist.

6. Bodenreinigungssystem nach Anspruch 5, wobei der Reinigungs- (8) und Begrenzungsweg (5) von dem mobilen, selbstfahrenden Gerät (1) wiederholbar abfahrbar sind.

7. Bodenreinigungssystem nach einem der vorhergehenden Ansprüche, wobei durch den Benutzer mittels des Reinigungs- (8) oder Begrenzungswegs (5) No-Go-Flächen (7) definierbar sind, die insbesondere von dem Reinigungsauftrag ausgeschlossen sind.

8. Verfahren zur automatischen Bearbeitung von Bodenflächen mit Hilfe eines Bodenreinigungssystems nach einem der vorhergehenden Ansprüche, umfassend folgende Schritte:
- Bestimmten des Reinigungs- (8) oder Begrenzungswegs (5) mit dem Zusatzgerät (2) durch Abgehen dieses Weges durch den Benutzer,
- Übermitteln des abgegangenen Reinigungs- (8) oder Begrenzungswegs (5) an das mobile, selbstfahrende Gerät (1),
- Beginn der Reinigung entlang des abgegangenen Reinigungswegs (8) oder Reinigung der vom Begrenzungsweg (5) eingeschlossenen Bodenfläche (6) gemäß dem Reinigungsauftrag, **dadurch gekennzeichnet, dass** bei einem offenen Reinigungsweg (8) das Reinigen der Bodenfläche (6) exakt entlang des Reinigungswegs (8) erfolgt, und bei einem geschlossenen Begrenzungsweg (5) das Reinigen der Bodenfläche (6) zusätzlich innerhalb einer vom Begrenzungsweg (8) definierten Fläche erfolgt.

9. Verfahren nach Anspruch 8, wobei der Reinigungs- (8) oder Begrenzungsweg (5) anhand von einem Standort (S) des mobilen, selbstfahrenden Geräts (1) ermittelt wird.

## Claims

1. Floor cleaning system comprising
- a mobile, self-driving apparatus (1), in particular cleaning apparatus for autonomous treatment of floor areas (6) such as a vacuuming and/or sweeping and/or wiping robot, having an actuatable running gear, a controller and a communication element,
- a portable additional apparatus (2) for a user, having an operating unit, a communication unit and a position determination unit,
wherein the user with the position determination unit defines the floor area (6) to be cleaned, by the user with the additional apparatus (2) walking a cleaning (8) or delimiting path (5), which can be transferred to the mobile, self-driving apparatus (1) in order for the mobile, self-driving apparatus (1) to clean along the cleaning path (8) or to clean the floor area (6) enclosed by the delimiting path (5) in accordance with a cleaning request, **characterised in that** with an open cleaning path (8) the cleaning of the floor area (6) takes place exactly along the cleaning path (8), and/or with a closed delimiting path (5) the cleaning of the floor area (6) additionally takes place within an area defined by the delimiting path (8).

2. Floor cleaning system according to claim 1, wherein a starting point of the cleaning (8) or delimiting path (5) is a location (S) of the mobile, self-driving apparatus (1).

3. Floor cleaning system according to one of the preceding claims, wherein the cleaning (8) or boundary path (5) can be determined on the basis of a location (S) of the mobile, self-driving apparatus (1).

4. Floor cleaning system according to one of the preceding claims, wherein the definition of the cleaning (8) or delimiting path (5) starts at a location (S) of the mobile self-driving apparatus (1), and the cleaning of the floor area (6) starts at a cleaning point (S1) on the cleaning path (8) or the delimiting path (5) defined by the user.

5. Floor cleaning system according to one of the preceding claims, wherein the cleaning (8) or delimiting path (5) can be stored in the controller of the mobile, self-driving apparatus (1).

6. Floor cleaning system according to claim 5, wherein the cleaning (8) and delimiting path (5) can be traversed repeatedly by the mobile, self-driving apparatus (1).

7. Floor cleaning system according to one of the preceding claims, wherein No-Go areas (7) can be defined by the user by means of the cleaning (8) or delimiting path (5), said No-Go areas being excluded in particular from the cleaning request.

8. Method for automatic treatment of floor areas with the aid of a floor cleaning system according to one of the preceding claims, comprising the following steps:
- determining the cleaning (8) or delimiting path (5) with the additional apparatus (2) by the user walking this path,
- transmitting the walked cleaning (8) or delimiting path (5) to the mobile self-driving apparatus (1),
- beginning the cleaning along the walked cleaning path (8) or cleaning the floor area (6) enclosed by the delimiting path (5) in accordance with the cleaning request,
**characterised in that** with an open cleaning path (8) the cleaning of the floor area (6) takes place exactly along the cleaning path (8), and with a closed delimiting path (5) the cleaning of the floor area (6) additionally takes place within an area defined by the delimiting path (8).

9. Method according to claim 8, wherein the cleaning (8) or delimiting path (5) is determined on the basis of a location (S) of the mobile, self-driving apparatus (1).

## Revendications

1. Système de nettoyage de sol, comprenant :
- un appareil (1), en particulier un appareil de nettoyage, mobile, automoteur destiné à un traitement autonome des surfaces du sol (6), tel qu'un robot aspirateur et/ou un robot de balayage et/ou un robot laveur de sol, comprenant un mécanisme de roulement actionnable, un dispositif de commande et un organe de communication,
- un appareil auxiliaire portatif (2) pour un utilisateur, comprenant une unité de commande, une unité de communication et une unité de détermination de position,
dans lequel l'utilisateur définit au moyen de l'unité de détermination de position la surface du sol (6) à nettoyer, en parcourant un chemin de nettoyage (8) ou un chemin de délimitation (5) avec l'appareil auxiliaire (2), qui peut être transmis à l'appareil mobile automoteur (1), afin de nettoyer avec l'appareil mobile automoteur (1) le long du chemin de nettoyage (8) ou sur la surface du sol (6) entourée par le chemin de délimitation (5) conformément à une commande de nettoyage,
**caractérisé en ce que**, dans le cas d'un chemin de nettoyage ouvert (8), le nettoyage de la surface du sol (6) s'effectue exactement le long du chemin de nettoyage (8) et, dans le cas d'un chemin de délimitation fermé (5), le nettoyage de la surface du sol (6) s'effectue en plus à l'intérieur d'une surface définie par le chemin de délimitation (8).

2. Système de nettoyage de sol selon la revendication 1, dans lequel un point de départ du chemin de nettoyage (8) ou du chemin de délimitation (5) est un emplacement (S) de l'appareil mobile automoteur (1).

3. Système de nettoyage de sol selon l'une des revendications précédentes, dans lequel le chemin de nettoyage (8) ou le chemin de délimitation (5) peut être déterminé à partir d'un emplacement (S) de l'appareil mobile automoteur (1).

4. Système de nettoyage de sol selon l'une des revendications précédentes, dans lequel la définition du chemin de nettoyage (8) ou du chemin de délimitation (5) débute au niveau d'un emplacement (S) de l'appareil mobile automoteur (1), et le nettoyage de la surface du sol (6) débute sur le chemin de nettoyage (8) ou le chemin de délimitation (5) au niveau d'un point de nettoyage (S1) défini par l'utilisateur.

5. Système de nettoyage de sol selon l'une des revendications précédentes, dans lequel le chemin de nettoyage (8) ou de délimitation (5) peut être enregistré dans le dispositif de commande de l'appareil mobile automoteur (1).

6. Système de nettoyage de sol selon la revendication 5, dans lequel le chemin de nettoyage (8) et le chemin de délimitation (5) peuvent être parcourus par l'appareil mobile automoteur (1) de façon répétable.

7. Système de nettoyage de sol selon l'une des revendications précédentes, dans lequel des zones interdites (7) peuvent être définies par l'utilisateur au moyen du chemin de nettoyage (8) ou du chemin de délimitation (5), qui sont en particulier exclues de la commande de nettoyage.

8. Procédé de traitement automatique de surfaces du sol à l'aide d'un système de nettoyage de sol selon l'une des revendications précédentes, comprenant les opérations suivantes :
- détermination du chemin de nettoyage (8) ou du chemin de délimitation (5) à l'aide de l'appareil auxiliaire (2) en parcourant ce chemin par l'utilisateur,
- transmission du chemin de nettoyage (8) ou du chemin de délimitation parcouru (5) à l'appareil mobile automoteur (1),
- début du nettoyage le long du chemin de nettoyage (8) parcouru ou du nettoyage de la surface du sol (6) entourée par le chemin de délimitation (5) conformément à la commande de nettoyage,
**caractérisé en ce que**, dans le cas d'un chemin de nettoyage ouvert (8), le nettoyage de la surface du sol (6) s'effectue exactement le long du chemin de nettoyage (8) et, dans le cas d'un chemin de délimitation fermé (5), le nettoyage de la surface du sol (6) s'effectue en plus à l'intérieur d'une surface définie par le chemin de délimitation (8).

9. Procédé selon la revendication 8, dans lequel le chemin de nettoyage (8) ou le chemin de délimitation (5) est déterminé à partir d'un emplacement (S) de l'appareil mobile automoteur (1).
